# FASCICULE DE BREVET EUROPEEN

(11) **EP 0 517 630 B1**
(45) Date de publication et mention de la délivrance du brevet: **28.12.1994**
(21) Numéro de dépôt: 92420191.6
(22) Date de dépôt: 05.06.1992
(51) Int. Cl.: A22C 17/14, A22C 13/00

(54) **Procédé et dispositifs pour la fabrication d'enveloppes destinées à l'embossage de produits de charcuterie**
Verfahren und Vorrichtung zur Herstellung von Hüllen zum Füllen mit Fleischwaren
Method and device for the manufacture of casings for the stuffing of meat products

(30) Priorité: 06.06.1991 FR 9107607
(43) Date de publication de la demande: 09.12.1992
(73) Titulaire: H-SEC, F-69003 Lyon (FR)
(72) Inventeur: Coutave, Patrick, F-42520 Maclas (FR)
(74) Mandataire: Guerre, Dominique

(56) Documents cités:
- DE-A- 1 479 836
- DE-A- 3 434 290
- DE-A- 3 434 290
- DE-U- 8 511 803
- FR-A- 453 942
- FR-A- 1 354 919
- GB-A- 2 090 306
- NL-A- 285 345
- US-A- 1 926 990
- US-A- 2 231 954
- US-A- 4 075 737

## Description

La présente invention concerne des produits de charcuterie, du type saucisson ou saucisse sèche.

Conformément au Code de la Charcuterie, de la Salaison et des Conserves de Viande, 3ème édition Janvier 1986, édité par le Centre Technique de la Charcuterie, de la Salaison et des Conserves de Viandes, un saucisson sec ou une saucisse sèche comprend :
- une enveloppe allongée poreuse, par exemple un boyau naturel ou artificiel, dont les deux extrémités sont chacune liées, par une ficelle par exemple
- une pâte de viande ayant subi un processus de maturation-dessiccation à travers l'enveloppe ou boyau, composée en général de viande crue, par exemple de porc, hachée plus ou moins finement, de gras dur, et de divers ingrédients d'assaisonnement.

La présente invention concerne un boyau de porc ouvré, c'est-à-dire travaillé et façonné pour aboutir à une enveloppe pour saucisson ou saucisse sèche, permettant un embossage dans des conditions industrielles, c'est-à-dire avec une bonne productivité et une qualité relativement homogène d'un saucisson à un autre.

Plus précisément l'invention concerne une enveloppe comprenant une pluralité de morceaux de forme sensiblement rectangulaire et de largeur sensiblement égale, disposés l'un au-dessus de l'autre, dont les deux bordures de l'un sont liées continuement aux deux bordures de l'autre respectivement, selon leur longueur, par exemple, par couture.

Par "liaison continue", ou "assemblage continu", ou "continuement", on entend toute liaison permettant de rassembler bord à bord deux bordures appartenant à deux morceaux respectivement, ceci selon la longueur de l'enveloppe ou du boyau, et dans des conditions permettant de contenir la pâte de viande dans ladite enveloppe, une fois ses deux extrémités serrées par un lien, par exemple une attache métallique.

L'expérience montre qu'une enveloppe ainsi constituée et obtenue présente toutes les qualités d'un boyau naturel, tout en permettant un embossage dans des conditions industrielles. Ainsi, une enveloppe telle que précédemment définie ralentit le dessèchement du saucisson, le protège vis-à-vis de l'atmosphère extérieure, et résiste suffisamment au déchirement et à l'arrachement, dans les conditions d'embossage industriel rencontrées. Et, cette enveloppe se comporte exactement à la manière d'un boyau naturel, en développant les moisissures participant au processus de maturation-dessiccation du saucisson.

Une enveloppe telle que précédemment décrite est obtenue, conformément au document FR-A-453 942, selon le procédé comprenant les étapes suivantes :
(a) séchage d'une pluralité de sections de boyau, d'origine animale très diverse, comprenant chacune au moins une épaisseur de boyau ;
(b) découpe de toutes les sections de boyau à l'état sec, chacune sensiblement selon une génératrice ou la longueur dudit boyau, pour obtenir une pluralité de morceaux de forme sensiblement rectangulaire ;
(c) assemblage, par exemple par couture, des morceaux, superposables, et selon leurs bordures, pour obtenir une enveloppe longitudinale ;
(d) retournement sur elle-même de ladite enveloppe, pour disposer les deux bordures assemblées à l'intérieur de ladite enveloppe.

La présente invention a pour objet, un procédé permettant de retourner l'enveloppe, de manière mécanique, c'est-à-dire en limitant au maximum l'intervention manuelle de l'opérateur, et selon lequel l'enveloppe longitudinale est obtenue, d'abord par assemblage, par exemple par couture bout à bout, des différents morceaux, pour obtenir au moins deux bandes superposables de largeur sensiblement égale, puis par assemblage des deux bandes superposées en liant continuement les deux bordures de l'une aux deux bordures de l'autre, et l'étape (d) de retournement est effectuée de part et d'autre d'un noyaux creux d'extension longitudinale, présentant à son extrémité antérieure une ouverture de contour sensiblement fermé, dont la bordure sert à l'appui du pli de l'enveloppe en cours de retournement, et on fait circuler l'enveloppe non retournée à l'intérieur du noyau creux , de son extrémité postérieure à son extrémité antérieure, et l'enveloppe retournée à l'extérieur du noyau creux, de son extrémité antérieure vers son extrémité postérieure, ou inversement, c'est-à-dire l'enveloppe non retournée à l'extérieur et l'enveloppe retournée à l'intérieur du noyau creux.

La solution proposée selon l'invention permet un retournement de très grandes longueurs d'enveloppe.

La présente invention est maintenant décrite par référence aux dessins annexés, dans lesquels :
- la figure 1 représente une vue en perspective d'une enveloppe fabriquée selon l'invention
- la figure 2 représente une vue de face d'un saucisson fabriqué selon l'invention, en cours d'embossage, avec une enveloppe selon figure 1
- la figure 3 représente une vue de face d'un saucisson fabriqué selon l'invention
- la figure 4 représente une vue en coupe selon la ligne IV-IV de la figure 3 du saucisson représenté sur cette dernière
- la figure 5 représente une vue en perspective, avec arrachement partiel, d'un dispositif de découpe du boyau sec, pouvant être utilisé pour l'exécution du procédé selon l'invention
- la figure 6 représente une vue en bout du dispositif selon figure 5
- la figure 7 représente une vue en perspective d'un dispositif de retournement pouvant être utilisé dans l'exécution du procédé selon l'invention
- la figure 8 représente une vue en bout du dispositif selon figure 7, avec sa tête de traction
- la figure 9 représente une vue en coupe selon la ligne IX-IX de la figure 8.

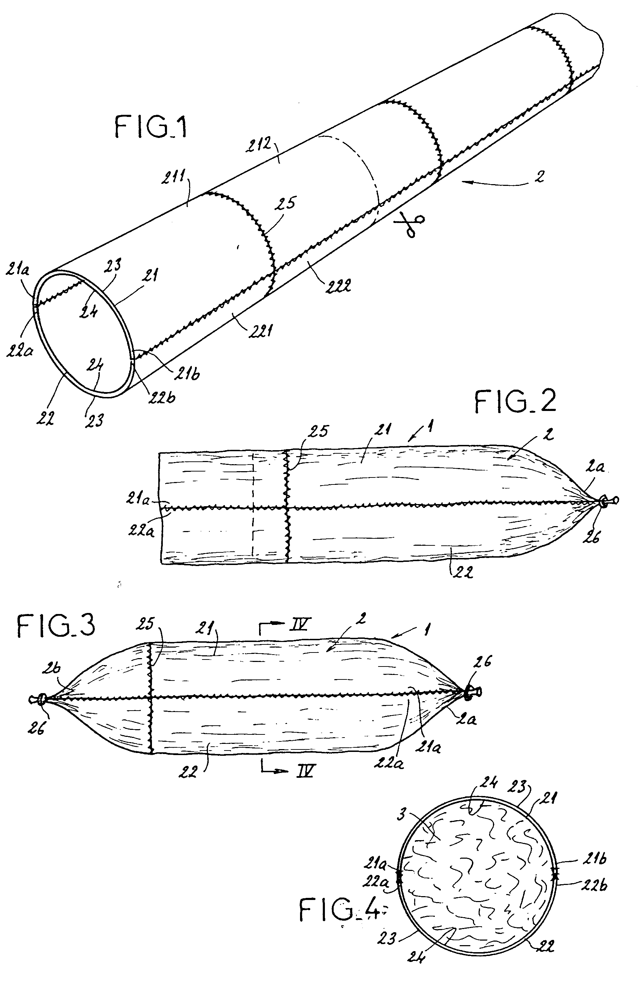

Conformément à la figure 3, un saucisson 1 fabriqué selon l'invention comprend une enveloppe 2 allongée, de forme tubulaire ou cylindrique, dont les deux extrémités 2a et 2b sont rassemblées et liées par deux attaches ou bagues métalliques 26 respectivement. Un pâte de viande 3, composée au moins de viande crue hachée, de gras, et d'ingrédients d'assaisonnement, est contenue à l'intérieur de l'enveloppe 2.

L'enveloppe 2 comprend deux bandes 21 et 22 de largeur sensiblement égale, disposées l'une au-dessus de l'autre, dont les deux bordures 21a et 21b de l'une sont liées continuement, par couture par exemple, aux deux bordures 22a et 22b de l'autre respectivement. Comme le montre la figure 4, les bordures précitées sont repliées deux par deux, à l'intérieur de l'enveloppe 2, avec les coutures longitudinales décrites précédemment.

Chaque bande 21 est constituée par l'assemblage, continuement selon une direction transversale (perpendiculaire) à l'enveloppe 2, par couture 25, de deux morceaux 211 et 212, ainsi mis bout à bout. Il en est de même pour la bande 22, constituée par la couture bout à bout des deux morceaux 221 et 222.

Comme le montre la figure 4, chaque bande 21 ou 22 comprend de manière superposée, éventuellement collées naturellement l'une sur l'autre, d'une part une feuille 24 en menu de porc, disposée du côté intérieur à l'enveloppe 2, et d'autre part une feuille 23 en chaudin de porc, disposée du côté extérieur à cette même enveloppe. Par ailleurs, en se référant à l'intestin de porc, qui présente morphologiquement un côté intérieur et un côté extérieur, c'est-à-dire avant d'être découpé et ouvré pour aboutir aux bandes 21 et 22 précédemment décrites, la superposition des feuilles 23 et 24 est faîte de telle manière que le côté originellement à l'extérieur du menu est disposé contre le côté originellement à l'extérieur du chaudin.

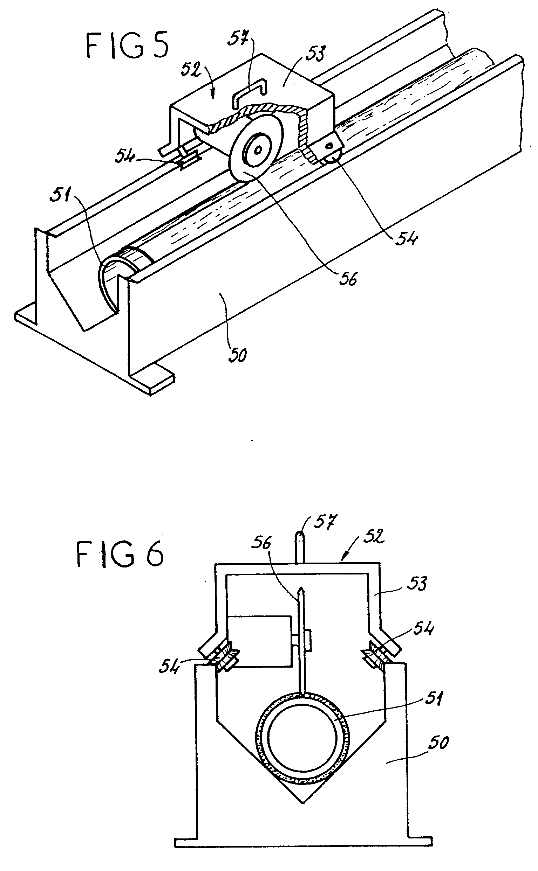

Conformément aux figures 5 et 6, le dispositif de découpe représenté comprend :
- une gouttière 50, permettant de supporter et caler un support droit 51, par exemple un tube en matière plastique de qualité alimentaire, sur et autour duquel un boyau sec est tendu
- et un moyen de coupe 52 comportant un support 53 mobile en translation sur la gouttière 50, par l'intermédiaire de roulements 54 coopérant avec deux rails 55 ; sur le support, en relation avec l'intérieur de la gouttière, est disposée à rotation une lame de coupe 56 ; à l'opposé de la lame de coupe 56 est disposée une poignée 57, permettant la manipulation en translation du moyen de coupe 52.

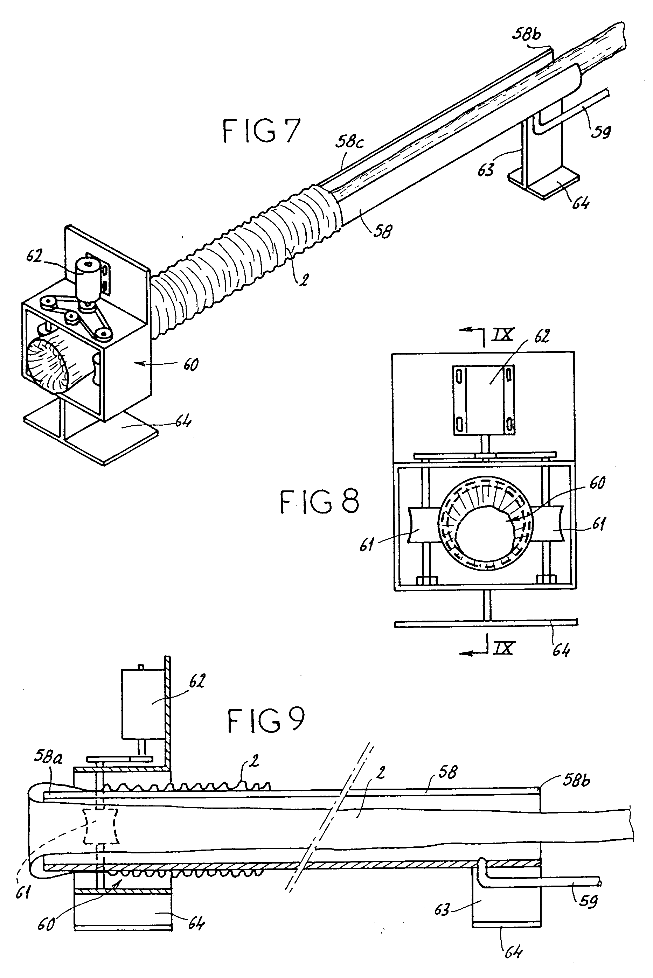

Conformément aux figures 7 à 9, le dispositif de retournement comprend :
- un noyau creux 58 d'extension longitudinale, par exemple un tube métallique disposé sur un support 64 de manière horizontale ; ce noyau creux comporte deux ouvertures 58a et 58b, respectivement à son extrémité antérieure et à son extrémité postérieure ; la bordure de l'ouverture 58a, non visible à la figure 7, sert à l'appui du pli circulaire de l'enveloppe 2 en cours de retournement, et l'ouverture postérieure sert à l'introduction de l'enveloppe non retournée ; le noyau creux 58 est pourvu d'une fente longitudinale 58c, permettant l'introduction de l'enveloppe non retournée, au début de l'étape de retournement
- un moyen 59 d'introduction d'un fluide, par exemple de l'air comprimé, disposé en relation avec l'extrémité postérieure 58b du noyau 58, pour faire circuler un flux à l'intérieur du tube 58, et établir un interstice fluide entre la bordure antérieure de ce dernier et le pli de l'enveloppe 2 en cours de retournement
- une tête de traction 60 de l'enveloppe 2 retournée, laquelle circule à l'extérieur du noyau creux 58, de son extrémité antérieure 58a vers son extrémité postérieure 58b ; cette tête de traction est disposée en relation avec l'ouverture antérieure 58a, et comporte deux galets latéraux 61 d'entraînement par friction de la paroi de l'enveloppe 2, entre le noyau 58 et lesdits galets ; comme représentée à la figure 7, cette tête de traction est pourvue de son propre moyen d'entraînement 62 des galets 61, et elle est escamotable par rapport à l'ouverture antérieure 58a, de manière à permettre l'extraction de l'enveloppe 2 retournée
- une butée extérieure 63, du côté de l'extrémité postérieure 58b du noyau creux 58, permettant d'arrêter l'enveloppe 2 retournée, circulant à l'extérieur du noyau 8 vers l'extrémité postérieure 58b.

Avec les dispositifs et équipements précédemment décrits, on peut obtenir une enveloppe 2 telle que représentée à la figure 2, mais à l'état plissé, à l'issue des différentes étapes de fabrication maintenant décrites.

On part tout d'abord d'une multiplicité de sections de boyau animal, par exemple de boeuf ou de porc, choisies chacune en fonction de leurs forme et dimensions, ainsi que de la qualité dudit boyau. Les sections ainsi retenues sont à l'état mouillé, éventuellement sous forme plissée, par exemple extraites d'une saumure dans laquelle le boyau était initialement conservé.

On dispose tout d'abord de supports droits, par exemple des tubes en polychlorure de vinyle alimentaire, tels que représentés sous la référence numérique 51 à la figure 5. Sur chacun de ces supports droits, on enfile une ou plusieurs sections successives de boyaux superposées, en fonction de la qualité finale recherchée et des caractéristiques spécifiques des sections précédemment retenues. Par exemple, on enfile une première section de boyau relativement fin de boeuf ou de porc, puis on recouvre cette première section par une deuxième section de boyau relativement épais de boeuf ou de porc.

Tous les supports droits, revêtus chacun d'une ou plusieurs épaisseurs de boyaux, sont alors disposés verticalement sur un seul et même support, et toutes les sections de boyau sont séchées ensemble dans cette disposition, par tout moyen approprié, par exemple dans une étuve, ou dans une atmosphère à hygrométrie et température contrôlées.

Une fois séché, chaque support droit 51, revêtu d'une ou plusieurs épaisseurs de boyau sec, lesquels constituent ensemble par collage une seule et même paroi naturelle, est disposé dans la gouttière 50 du dispositif représenté à la figure 5. En déplaçant en translation le moyen de coupe 52, on fend la paroi séchée, selon une génératrice du tube 51. On récupère chaque support droit 51, ayant servi de support au séchage et à la découpe, et on obtient ainsi une pluralité ou multiplicité de morceaux ou plaques de forme sensiblement rectangulaire, constituées chacune par du boyau sous une seule épaisseur, ou au moins deux épaisseurs parfaitement collées l'une à l'autre.

Avec une machine à coudre industrielle, et avec un fil de coton alimentaire, on assemble les différents morceaux obtenus, de dimensions et forme homogènes, bout à bout, pour obtenir au moins deux bandes, telles que 21 et 22 représentées à la figure 1, superposables, par exemple face externe de l'une contre face externe de l'autre. On assemble autant de morceaux qu'il le faut, pour obtenir la longueur finale désirée pour chacune des bandes à superposer. On assemble ensuite, toujours par couture, les deux bandes 21 et 22 superposées pour obtenir une enveloppe 2 tubulaire de calibre défini. Plus précisément, les coutures s'effectuent dans le sens de la longueur des bandes, et assemblent de part et d'autre de l'enveloppe, les deux bordures des deux bandes en vis-à-vis. C'est l'écartement des coutures longitudinales, entre les bordures précitées, qui détermine le calibre de l'enveloppe tubulaire.

A l'issue de ce processus de couture, les coutures longitudinales, assemblant les bordures des deux bandes, se situent à l'extérieur de l'enveloppe obtenue.

Avec le matériel décrit par référence aux figures 7 à 9, on procède alors au retournement de l'enveloppe, tout en assurant le plissage de l'enveloppe retournée, à des fins de stockage intermédiaire, en vue de son emploi ultérieur. Ce retournement est effectué de part et d'autre du noyau creux 58, dont la bordure de l'ouverture antérieure 58a sert à l'appui du pli circulaire de l'enveloppe 2 en cours de retournement. On fait circuler l'enveloppe non retournée à l'intérieur du noyau creux 58, de son extrémité postérieure 58b à son extrémité antérieure 58a, et l'enveloppe retournée, à l'extérieur du noyau creux 58, de son extrémité antérieure 58a vers son extrémité postérieure 58b. Un flux d'air comprimé est introduit à l'intérieur du noyau creux, par le moyen 59, de telle manière qu'un interstice gazeux s'établit ou est interposé entre la bordure de l'ouverture antérieure 58a, et le pli circulaire de l'enveloppe 2 en cours de retournement. L'enveloppe retournée circule à l'extérieur du noyau creux 58, sous l'effet de l'entraînement par la tête de traction 60, mais l'extrémité avant de l'enveloppe retournée se trouve bloquée longitudinalement contre la butée extérieure 63, moyennant quoi l'enveloppe retournée est progressivement plissée, perpendiculairement à la direction du noyau creux 58, pour aboutir à une configuration ramassée et repliée sur elle-même de l'enveloppe 2, permettant son stockage. Par escamotage de la tête de traction 60, il est possible d'extraire l'enveloppe retournée, sous forme plissée, et de la transférer sur tout support approprié, souple ou rigide, perforé ou non, permettant d'assurer son maintien et d'empêcher sa déformation lors de son stockage.

Par un emballage approprié de l'enveloppe plissée 2 ainsi obtenue sur un support, par exemple dans une saumure, sous vide, ou sous atmosphère contrôlée, on peut ainsi préserver les qualités essentielles de l'enveloppe ainsi obtenue, jusqu'à son utilisation, c'est-à-dire son embossage pour fabriquer des saucissons.

## Revendications

1. Procédé de fabrication d'une enveloppe (2), destinée à l'obtention par embossage de produits de charcuterie du type saucisson ou saucisse sèche, comprenant les étapes suivantes :
(a) séchage d'une pluralité de sections de boyau ou intestin animal, comprenant chacune au moins une épaisseur de boyau ;
(b) découpe de la pluralité des sections de boyau à l'état sec, chacune sensiblement selon une génératrice dudit boyau, pour obtenir une pluralité de morceaux (211,212,221,222) de forme sensiblement rectangulaire ;
(c) assemblage, par exemple par couture, des morceaux, superposables, et selon leurs bordures pour obtenir une enveloppe longitudinale (2) ;
(d) retournement sur elle-même de ladite enveloppe, pour disposer les deux bordures (21a,21b,22a,22b) assemblées à l'intérieur de ladite enveloppe
**caractérisé en ce que** l'enveloppe longitudinale (2) est obtenue, d'abord par assemblage, par exemple par couture, des différents morceaux, pour obtenir au moins deux bandes (21,22) superposables de largeur sensiblement égale, puis par assemblage des deux bandes (21,22) superposées en liant continuement les deux bordures de l'une aux deux bordures de l'autre, et l'étape (d) de retournement est effectuée de part et d'autre d'un noyau creux (58) d'extension longitudinale, présentant à son extrémité antérieure (58a) une ouverture de contour sensiblement fermé, dont la bordure sert à l'appui du pli de l'enveloppe en cours de retournement, et on fait circuler l'enveloppe non retournée à l'intérieur du noyau creux , de son extrémité postérieure (58b) à son extrémité antérieure (58a), et l'enveloppe retournée à l'extérieur du noyau creux, de son extrémité antérieure vers son extrémité postérieure, ou inversement, c'est-à-dire l'enveloppe non retournée à l'extérieur et l'enveloppe retournée à l'intérieur du noyau creux (58).

2. Procédé selon la revendication 1, caractérisé en ce que l'étape (a) de séchage est effectuée en disposant chaque section de boyau sur et autour d'un support droit (51), dont la forme et les dimensions sont adaptées au boyau à sécher, et l'étape (b) est effectuée en découpant le boyau sec sur ledit support droit.

3. Procédé selon la revendication 2, caractérisé en ce qu'on supporte et on cale chaque support droit (51) avec son boyau sec, dans une gouttière (50), et on déplace un moyen de coupe (52), sur la gouttière, avec une lame de coupe (56) selon une génératrice de boyau.

## Claims

1. Method of manufacturing a casing (2) intended to obtain delicatessen products of the sausage or dried sausage type, by being stuffed, comprising the following steps:
(a) drying a plurality of sections of gut or animal intestine, each section comprising at least one thickness of gut;
(b) cutting the plurality of sections of gut in the dry state, each substantially along one generatrix of the said gut, in order to obtain a plurality of pieces (211, 212, 221, 222) of substantially rectangular shape;
(c) joining the superimposable pieces together, for example by stitching, and along their edges in order to obtain a longitudinal casing (2);
(d) turning the said casing inside out in order to locate the two joined edges (21a, 21b, 22a, 22b) on the inside of the said casing
characterized in that the longitudinal casing (2) is obtained, firstly by joining the various pieces, for example by stitching, in order to obtain at least two superimposable strips (21, 22) of substantially equal width, then by joining the two superimposed strips (21, 22), continuously linking the two edges of one to the two edges of the other, and the turning inside out step (d) is carried out on either side of a hollow core (58) with longitudinal extension, exhibiting, at its anterior end (58a), an opening of substantially closed contour, the border of which serves for the fold of the casing being turned inside out to rest against, and the casing which has not been turned inside out is run along the inside of the hollow core, from its posterior end (58b) to its anterior end (58a), and the casing which has been turned inside out is run along the outside of the hollow core, from its anterior end to its posterior end, or vice versa, that is to say with the casing which has not been turned inside out on the outside, and the casing which has been turned inside out on the inside of the hollow core (58).

2. Method according to Claim 1, characterized in that the drying step (a) is carried out by locating each section of gut on and around a straight support (51), the shape and dimensions of which are suited to the gut to be dried, and the step (b) is carried by cutting the dry gut on the said straight support.

3. Method according to Claim 2, characterized in that each straight support (51), together with its dry gut, is supported and immobilized in a gutter section (50), and a cutting means (52) is moved over the gutter section, with a cutting blade (56) along one gut generatrix.

## Patentansprüche

1. Verfahren zur Herstellung einer Hülle (2), um Metzgereiprodukte in der Art von Würsten oder Trockenwürsten herzustellen, umfassend die folgenden Schritte:
(a) Trocknen einer Mehrzahl von Abschnitten eines Darmes oder tierischer Eingeweide, die jeweils mindestens eine Darmdicke umfassen;
(b) Schneiden der Mehrzahl von Abschnitten des Darmes in einem trockenen Zustand gemäß einem geeigneten Muster des Darmes, um eine Mehrzahl von Stücken (211, 212, 221, 222) von im wesentlichen rechteckiger Form zu erhalten;
(c) Zusammensetzen von übereinanderlegbaren Stücken, z.B. durch Nähen, und entlang ihrer Ränder, um eine längliche Hülle (2) zu erhalten;
(d) Umdrehen derselben Hülle, um die beiden zusammengesetzten Ränder (21a, 21b, 22a, 22b) in das Innere der Hülle zu bringen,
dadurch gekennzeichnet, daß die längliche Hülle (2) durch Zusammensetzen, z.B. durch Nähen unterschiedlicher Stücke erhalten wird, um wenigstens zwei verbundene, übereinanderlegbare Streifen (21, 22) zu erhalten, dann Zusammensetzen der beiden übereinandergelegten Streifen (21, 22) durch ständiges Verbinden der beiden Streifen einer mit dem anderen entlang ihrer Ränder, und daß der Schritt (d) des Umdrehens auf beiden Seiten eines sich in Längsrichtung erstreckenden hohlen Kerns (58) erreicht wird, der an seinem vorderen Ende (58a) eine Öffnung mit einem im wesentlichen geschlossenen Rand aufweist, wobei der Rand zum Stützen der Falten der Hülle beim Umdrehen dient, und wobei man die nicht umgedrehte Hülle durch das Innere des hohlen Kerns führt, von seinem hinteren Ende (58b) zu seinem Anfangsende (58a), und die umgedrehte Hülle am äußeren des hohlen Kerns von seinem Anfangsende zu seinem äußeren Ende, oder umgekehrt, d.h. die nicht umgedrehte Hülle zum äußeren und die umgedrehte Hülle zum inneren des hohlen Kerns (58).

2. Verfahren gemäß Anspruch 1, dadurch gekennzeichnet, daß der Schritt (a) des Trocknens durch Anordnen jedes Abschnittes des Darmes auf und um eine gerade Unterlage (51) erreicht wird, wobei die Form und die Abmessungen auf den zu trocknenden Darm abgestimmt sind, und daß der Schritt (b) des trockenen Schneidens des Darmes auf der geraden Unterlage erfolgt.

3. Verfahren gemäß Anspruch 2, dadurch gekennzeichnet, daß die gerade Unterlage (51) mit dem trockenen Darm in einer Schiene (50) unterstützt und festgeklemmt wird, und daß ein Schneidmittel (52) mit einem Schneidmesser (56) gemäß einem Muster des Darmes über die Schiene bewegt wird.
